# EUROPEAN PATENT APPLICATION

(11) **EP 1 547 708 A1**
(43) Date of publication of application: **29.06.2005**
(21) Application number: 03733435.6
(22) Date of filing: 16.06.2003
(51) Int. Cl.: B22F 9/00

(54) **METHOD FOR PREPARING COLLOIDAL SOLUTION AND CARRIER HAVING COLLOIDAL PARTICLES FIXED ON SURFACE THEREOF, FUEL CELL CATHODE, FUEL CELL ANODE AND METHOD FOR PREPARING THE SAME AND FUEL CELL USING THE SAME, AND LOW TEMPERATURE OXIDATION CATALYST, METHOD FOR PREPARING THE SAME AND FUEL CELL FUEL MODIFYI**

(30) Priority: 16.07.2002 JP 2002207248; 03.12.2002 JP 2002351837; 03.12.2002 JP 2002351838; 03.12.2002 JP 2002351839
(71) Applicant: Nippon Sheet Glass Company, Limited, Osaka-shi, Osaka 541-8559 (JP)
(72) Inventor: MIYASHITA, Kiyoshi, c/o NIPPON SHEET GLASS CO. LTD, Osaka-shi, Osaka 541-8559 (JP); HISHINUMA, Akihiro, c/o NIPPON SHEET GLASS CO. LTD, Osaka-shi, Osaka 541-8559 (JP); SAKAI, Tsutomu, c/o Kansai Research Inst., Inc., Kyoto-shi, Kyoto 600-8813 (JP); OKUBO, Toyo, c/o Kansai Research Inst., Inc., Kyoto-shi, Kyoto 600-8813 (JP); SHINGU, Hirosyhi, c/o Kansai Research Inst., Inc., Kyoto-shi, Kyoto 600-8813 (JP); ISEKI, Yohei, c/o Kansai Research Inst., Inc., Kyoto-shi, Kyoto 600-8813 (JP)
(74) Representative: Golding, Louise Ann
(86) International application number: PCT/JP2003/007607
(87) International publication number: WO 2004/007125

(57) **Abstract**

A method for forming colloidal particles by boiling a solution containing a metal salt and a reducing agent; and a method for preparing a colloidal solution wherein the concentration of the metal salt in the solution is 1 × 10⁻⁴ mol/L or more and less than 4 × 10⁻⁴ mol/L; the equivalent concentration of the reducing agent is four times or more and 20 times or less the equivalent concentration of the metal salt; and the reaction time is 60 minutes or more and 300 minutes or less. A carrier wherein colloidal particles are fixed on the surface of a substrate by applying the colloidal solution prepared by the above-described method.

Methods for manufacturing a fuel cell cathode, a fuel cell anode, and a low temperature oxidation catalyst, wherein a colloidal solution prepared in the state wherein a solution containing a metal salt and a reducing agent is boiled to remove dissolved oxygen is applied to a substrate and colloidal particles are fixed on the substrate.

## Description

### Technical Field

The present invention relates to a method for preparing a colloidal solution containing colloidal particles that can exert catalytic functions and the like; and to a carrier wherein the colloidal particles are fixed on various substrates. The present invention also relates to a fuel cell cathode that promotes oxygen reduction reaction; a method for the manufacture thereof; and a fuel cell using the same. The present invention also relates to a fuel cell anode that promotes hydrogen oxidation reaction; a method for the manufacture thereof; and a fuel cell using the same. Furthermore, the present invention relates to a low temperature oxidation catalyst that exhibits excellent catalytic activity under a service temperature of 300°C or below, a method for the manufacture thereof; and a fuel modifying device for a fuel cell using the low-temperature oxidation catalyst.

### Background Art

It is broadly known that fine particles of a metal, such as platinum, functions as a catalyst. When fine metal particles are used as a catalyst, in order to widen the contact area with a reaction material, or to easily handle the catalyst, the fine metal particles are normally fixed on the surfaces of substrates, such as fibers, woven fabrics, non-woven fabrics, films and powdered bodies. Although there are various means to fix fine metal particles in the surfaces of substrates, a method for applying a colloidal solution containing fine metal particles onto the surface of the substrate is the most convenient method that can evenly fix the particles.

As a method for preparing a colloidal solution containing fine metal particles, a dispersion method wherein bulk metal is pulverized using a pulverizer, such as a colloid mill, and the pulverized fine particles are dispersed in a solvent. However, fine metal particles obtained using a dispersion method have large average particle diameters, and are relatively difficult to fix on the surface of a substrate. For example, when glass fiber or the like is treated with acid and alkali to make the surface thereof porous, the average pore diameter of the formed pores in the order of 1 to 10 nm; therefore, fine metal particles cannot enter into the pores, and cannot be well fixed on the surface of the glass fiver. Also in the dispersion method, since the width of the particle size distribution of fine metal particles is large, it is difficult to evenly fix fine metal particles on the surface of the substrate.

As a preparing method other than the dispersion method, a method wherein a reducing agent is added to a solution of a metal chloride to reduce the metal ions and to form fine metal particles has been known (Seitaro Namba and Ichiro Ohkura, "How to Prepare and Use Platinum Colloid", journal name: "Surface", Vol, 21, No. 8 (1983), pp. 450-456). In this publication, there is the following description.

### "2. How to Prepare Platinum Colloid

### 2.1 Platinum Colloid

For preparing platinum colloid, a 2-L round bottom flask with a condenser is used, and 960 ml of distilled water is poured therein and well boiled using a mantle heater. To this 60 ml of an aqueous solution of chloroplatinic acid (1 g-Pt/L) is added, the solution is brought to boiling again, 120 ml of an aqueous solution of sodium citrate (1% by weight) is added, and boiling is continued. Although the solution is initially light yellow in color due to the presence of chloroplatinic acid, it is gradually darkened, and becomes dark brown in 30 minutes after the addition of sodium citrate. When refluxing is further continued, the color of the solution changed to black in one hour, and thereafter, change in color is no longer observed. To stop the reaction, the reaction solution is placed in an ice water bath. The platinum colloid thus obtained is very stable, and if stored in a refrigerator, no aggregation is observed for several months.

Although this preparing method is very simple, care must be taken to the following three aspects in preparing: 1) the vessel is carefully cleaned, and is used after immersing in aqua regia to be used; 2) special care must be taken to water to be used, and ion-exchanged water distilled twice is used; and 3) heating is consistently continued during reaction to maintain the state of vigorous reaction. By taking these cares, platinum colloid can be prepared at high reproducibility.

The reason of vigorous boiling during reaction is because oxygen in the air interferes with the reaction. The platinum colloid must be prepared in the state wherein dissolved oxygen is removed, and if the colloid is prepared in the state wherein the solution is not vigorously boiled, reproducible results cannot be obtained because a long time is consumed for the synthesis, or aggregation occurs. In the state wherein dissolved oxygen is removed by blowing an inert gas, such as nitrogen gas, the platinum colloid can be prepared at a temperature as low as 70°C.

Chloroplatinic acid and sodium citrate that have not reacted can be removed by passing the solution through a column packed with the ion-exchange resin, Amberlite MB-1. Although the degree of removal can be determined by measuring the electrical conductivity of the solution, 6 ml of the ion-exchange resin is sufficient for 100 ml of the colloidal solution. At this time, the quantity of the platinum colloid adsorbed on the ion-exchange resin is extremely small."

Furthermore, this publication describes that in the above-described means, the average particle diameter of the platinum colloid increases with increase in the refluxing time (reaction time) of the reacting solution, and when the reaction time is about 5 hours, the average particle diameter reaches about 32 angstroms and thereafter it is kept constant. This publication also describes that platinum exerts a significant catalytic activity after the particle diameter has exceeded about 16 angstroms.

As means for fixing fine metal particles of the surface of a substrate, Japanese Patent Application Laid-Open No. 07-256112 describes a method for fixing metal platinum on zeolite, wherein zeolite is fed in an aqueous solution of divalent platinum ammine salt, suction-filtered, washed with water and heat-dried, heated to 500°C and maintained at this temperature, exposed to oxygen for a predetermined time, and then exposed to hydrogen to fix metal platinum on zeolite. According to this method, fine platinum particles are fixed in the pores of zeolite of an average diameter of 0.4 to 2 nm, and a catalyst carrier that can adsorb and oxidize bipolar molecules, such as carbon monoxide can be obtained.

The technique for preparing a material for fuel cells using carbon black or graphite having conductivity as a substrate in lieu of the above-described zeolite has also been known. For example, Japanese Patent Application Laid-Open No. 2002-222655 describes a method for preparing a cathode catalyst, wherein a commercially available carbon powder is added in a carrier solution prepared by adding an aqueous solution of ruthenium nitrate to a solution of a platinum ammine ethoxide complex, and dried and further exposed to hydrogen while heating in an electric furnace to form a platinum-ruthenium alloy on above-described carbon powder. Furthermore, Japanese Patent Application Laid-Open No. 2001-357857 describes a method for manufacturing a fuel cell anode wherein carbon black fired at a high temperature is immersed in a solution containing chloroplatinic acid and formalin and cooled to -10°C, and then sodium hydroxide is dropped to fix ultra-fine platinum particles to the carbon black.

When the present inventors prepared a colloidal solution of platinum according to the description of the above-described publications, it was confirmed that the average particle diameter of colloidal particles reached about 35 angstroms at the time when 60 minutes elapsed from the starting of the reaction, and about 70 to 80% of fed chloroplatinic acid was converted to colloidal particles. After 60 minutes had elapsed from the starting of the reaction, even if boiling was continued until 5 hours elapsed, the average particle diameter of colloidal particles, and the ratio of the weight of the colloidal particles to the weight of fed platinum (hereafter referred to as "metal recovery rate") showed little change.

This method for preparing a colloidal solution can be said to be an excellent method, because the uniformity of the particle diameters of the colloidal particles is high, and the metal recovery rate is as relatively high as 70 to 80%. However, if the average particle diameter of the colloidal particles can be closer to 16 angstroms, the catalytic activity can be further elevated, because the specific surface area of the colloidal particles can be increased that much. The room for the improvement of the metal recovery rate is also left.

Also the method described in Japanese Patent Application Laid-Open No. 07-256112 had a problem in that since ultra-fine platinum particles that exhibited catalytic activity were formed in the pores of zeolite, impurities contained in the materials of ultra-fine platinum particles or residue formed during the forming process could not be removed even if heating or firing were performed, and coated the surfaces of the ultra-fine platinum particles, or remained in the pores, lowering the catalytic activity in spite of the quantity of the fixed ultra-fine platinum particles.

Also the method described in Japanese Patent Application Laid-Open No. 2002-222655 had a problem in that impurities in the solution were adhered, or residue formed during the forming process remained on the surfaces of the carbon powder and the platinum-ruthenium alloy.

Furthermore, the method described in Japanese Patent Application Laid-Open No. 2001-357857 had a problem in that impurities in the solution were adhered, or residue formed during deposition remained on the surfaces of deposited ultra-fine platinum particles.

Therefore, the present invention was completed taking particular note of such problems. It is an object of the present invention is to provide a method for easily preparing a colloidal solution that can prepare colloidal particles having smaller particle diameters while elevating the metal recovery rate. Another object of the present invention is to provide a carrier that exhibits functions, such as catalyzing, efficiently by fixing the colloidal particles on a substrate.

Another object of the present invention is to provide a fuel cell cathode that can efficiently perform an oxygen reduction reaction, even if the adhesion quantity of the colloidal particles, which is a catalyst, is small. Also another object of the present invention is to provide a method for easily manufacturing the fuel cell cathode. A further object of the present invention is to provide a fuel cell having power generation efficiency using the fuel cell cathode.

Another object of the present invention is to provide a fuel cell anode that can efficiently perform a hydrogen oxidation reaction, even if the adhesion quantity of the colloidal particles, which is a catalyst, is small. Also another object of the present invention is to provide a method for easily manufacturing the fuel cell anode. A further object of the present invention is to provide a fuel cell having power generation efficiency using the fuel cell anode.

Another object of the present invention is to provide a low-temperature oxidation catalyst that exhibits a high catalytic activity, even if the adhesion quantity of the colloidal particles, which is a catalyst, is small. Also another object of the present invention is to provide a method for easily manufacturing the low-temperature oxidation catalyst. A further object of the present invention is to provide a fuel modifying device for a fuel cell that causes a CO shifting reaction even if the service temperature is 300°C or below, particularly 200°C or below, using the low-temperature oxidation catalyst having a high catalytic activity.

### Disclosure of the Invention

The present invention is characterized, in a method for preparing a colloidal solution described in the above-described publications, in that three parameters of the concentration of a metal salt, the ratio of equivalent concentration of a reducing agent to the equivalent concentration of the metal salt, and the reaction time are sophisticatedly combined and adjusted. Specifically, the optimal conditions for preparing in the method for preparing a colloidal solution are provided.

Since the colloidal particles prepared using the method of the present invention have particle diameters of the 10-nm order, and have extremely high uniformity, they can be easily and strongly fixed only be applying the colloidal solution onto porous glass fibers or the like using means well known to the art. Therefore, according to the present invention, a carrier having extremely high catalytic activity and durability can be easily manufactured.

The methods for manufacturing a fuel cell cathode, fuel cell anode, and a low-temperature oxidation catalyst according to the present invention are characterized in that colloidal particles are fixed on a substrate, using a colloidal solution prepared in a state wherein a solution containing a metal salt and a reducing agent is boiled to remove dissolved oxygen. According to this method, since the colloidal solution having extremely high stability even without containing a stabilizer or the like is applied onto a substrate, no heating or firing of the substrate for forming the colloidal particles are required, the colloidal particles can be easily fixed on the substrate, and there is no lowering of the catalytic activity due to the formation of residue. Also since the above-described colloidal solution can be prepared from an inexpensive metal salt as a starting material using a simple process, the preparing costs are extremely low. Also since the above-described colloidal solution has a uniform particle diameter, and is difficult to aggregate even in high concentration, no stabilizers for preventing precipitation are required, and the colloidal particles can be evenly fixed on the substrate.

Also according to a fuel cell cathode according to the present invention, the oxygen reducing reaction can be efficiently started even if the quantity of adhered colloidal particles is small. Furthermore, according to a fuel cell according to the present invention, the efficiency of power generation can be improved.

Also according to a fuel cell anode according to the present invention, the hydrogen oxidizing reaction can be efficiently started even if the quantity of adhered colloidal particles is small. Furthermore, according to a fuel cell according to the present invention, the efficiency of power generation can be improved.

Also according to a low-temperature oxidation catalyst according to the present invention, a high catalytic activity can be exhibited even if the fixing rate of the catalyst is low. Furthermore, according to a fuel modifying device for a fuel cell according to the present invention, the CO shifting reaction can be started at a high efficiency even at a low temperature of 300°C or below, in particular, 150 to 200°C. Therefore, since this device can contribute to the improvement of the power generating efficiency of fuel cells, and enables the use of members having not so high heat resistance, the option of member selection is widened.

### Brief Description of the Drawings

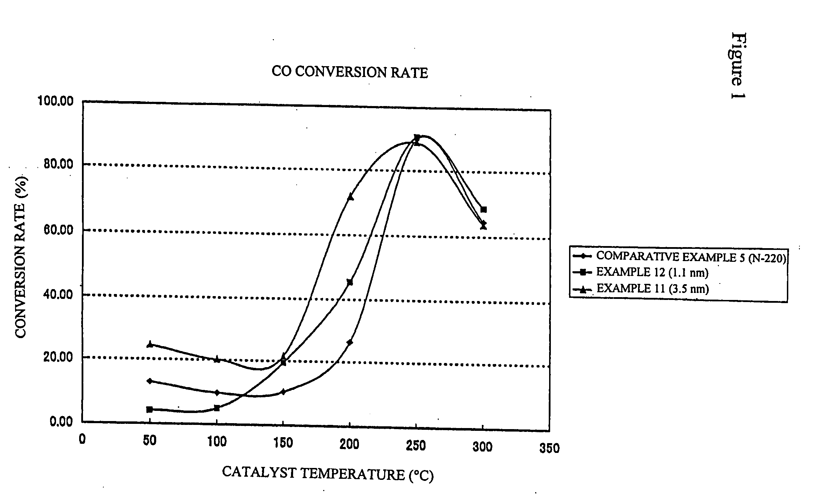

Figure 1 is a diagram showing the results of measuring CO conversion rates of the Examples.

### Best Mode for Carrying Out the Invention

The best mode of the present invention will be described in detail below. The present invention follows basically means described in the above-described publication (Seitaro Namba and Ichiro Ohkura, "How to Prepare and Use Platinum Colloid", journal name: "Surface", Vol, 21, No. 8 (1983), pp. 450-456). Therefore, only items different from this publication will be described.

The reducing agent is not specifically limited as long as it dissolves in water, and alcohols, citric acids, carboxylic acids, ketones, ethers, aldehydes or esters can be exemplified. The combination of two or more of these can also be used. As alcohols, methanol, ethanol, 1-propanol, 2-propanol, ethylene glycol or glycerin can be exemplified. As citric acids, citric acid, and citrate, such as sodium citrate, potassium citrate and ammonium citrate can be exemplified. As carboxylic acids, formic acid, acetic acid, fumaric acid, malic acid, succinic acid, aspartic acid or carboxylates thereof can be exemplified. As ketones, acetone or methylethyl ketone can be can be exemplified. As ethers, diethyl ether can be exemplified. As aldehydes, formalin or acetaldehyde can be exemplified. As esters, methyl formate, methyl acetate or ethyl acetate can be exemplified.

From the point of view of forming stable colloidal particles of a metal having a particle diameter of 1 to 20 nm, alcohols, citric acids or carboxylic acids are preferable as the reducing agent. In particular, citric acids are preferable for forming stable colloidal particles of a metal having a particle diameter of 1 to 5 nm. However, since the catalytic activity or the like of colloidal particles is sharply lowered if the particle diameter thereof is less than 1.6 nm, the particle diameter thereof is preferably 1.6 nm or more.

The solvent composing the reaction solution is not specifically limited as long as it can dissolve the reducing agent and the metal salt, and water, alcohols, ketones or ethers can be exemplified. The combination of two or more of these can also be used. As alcohols, methanol, ethanol, 1-propanol or 2-propanol can be exemplified. As ketones, methyl formate, methyl acetate or ethyl acetate can be exemplified. As ethers, methyl ethyl ether or diethyl ether can be exemplified. From point of view of completely dissolving the metal salts, the solvent is preferably water or alcohols.

The metal salt is not specifically limited as long as it is dissolved in the solvent, and reduced by a reducing agent. For example, chlorides, nitrates, sulfates or metal complex compounds of platinum (Pt), ruthenium (Ru), gold (Au), lead (Pb), rhodium (Rh), iridium (Ir), cobalt (Co), iron (Fe), nickel (Ni), copper (Cu) or tin (Sn) can be listed. The combination of two or more of these can also be used. If the combination of two or more of metal salts is used, the colloidal particles of an alloy can be prepared. When a platinum salt is used as the metal salt, the particle diameter of colloidal particles becomes particularly small, and stable colloidal particles of 1 to 5 nm can be obtained.

Boiling a reaction solution containing a metal salt and a reducing agent accelerates the reducing reaction of metal ions while eliminating dissolved oxygen. In the initial stage of the reaction, it is considered that the metal ions in the reaction solution are concurrently reduced to form an innumerable number or metal atoms are formed, and these drift in the reaction solution. This can be estimated from the fact that although the colloidal solution 30 minutes after the start of the reaction exhibit little catalytic activity in Example 1 described below, the platinum concentration thereof (the concentration of the residual metal after removing metal ions, that is, the concentration of colloidal particles) becomes relatively high. Specifically, it is considered that metal atoms and the clusters thereof that cannot exhibit catalytic activity are present because the particle diameter has not reached 1.6 nm, although the metal ions are reduced and no longer present as ions, and are not caught by ion-exchange resin. It is considered that since these meal atoms attract metal ions and cause the reducing reaction to occur, or metal atoms and clusters aggregate, the colloidal particles grow gradually to catalytic activity. From these, it is estimated that the growth of colloidal particles in the reaction solution is closely related to "equivalent concentration of the reducing agent to the equivalent concentration of the meta salt" directly related to the generation of metal atoms; the "concentration of the metal salt" directly related to the frequencies of the collision of the metal atoms, the clusters thereof and metal ions; and the "reaction time" directly related to the reducing reaction and the collision of metal atoms. Therefore, by sophisticatedly changing and combining these three parameters, more advantageous preparing conditions than in the method for preparing a colloidal solution described in the above publication are found and specified.

As a first embodiment thereof, the reaction time is 60 minutes or more and 300 minutes or less when the concentration of the metal salt in the reaction solution is 1 × 10⁻⁴ mol/L or more and less than 4 × 10⁻⁴ mol/L, and the equivalent concentration of the reducing agent is four times or more and 20 times or less the equivalent concentration of the metal salt. According to the first embodiment, the metal recovery rate can be 80 to 100%, and the average particle diameter of metal colloidal particles can be 2.3 nm or smaller.

As a second embodiment thereof, the reaction time is 30 minutes or more and 150 minutes or less when the concentration of the metal salt in the reaction solution is 4 × 10⁻⁴ mol/L or more and less than 6 × 10⁻⁴ mol/L, and the equivalent concentration of the reducing agent is four times or more and 20 times or less the equivalent concentration of the metal salt. According to the second embodiment, the average particle diameter of metal colloidal particles can be 2 nm or smaller without precipitating the metal colloidal particles.

As a third embodiment thereof, the reaction time is 30 minutes or more and 90 minutes or less when the concentration of the metal salt in the reaction solution is 6 × 10⁻⁴ mol/L or more and 15 × 10⁻⁴ mol/L or less, and the equivalent concentration of the reducing agent is four times or more and 20 times or less the equivalent concentration of the metal salt. According to the third embodiment, the average particle diameter of metal colloidal particles can be reduced without precipitating the metal colloidal particles.

As a fourth embodiment thereof, the reaction time is 60 minutes or more and 120 minutes or less when the concentration of the metal salt in the reaction solution is 4 × 10⁻⁴ mol/L or more and less than 6 × 10⁻⁴ mol/L, and the equivalent concentration of the reducing agent is twice or more and less than four times the equivalent concentration of the metal salt. According to the fourth embodiment, the average particle diameter of metal colloidal particles can be 2.3 nm or smaller without precipitating the metal colloidal particles.

As a fifth embodiment thereof, the reaction time is 30 minutes or more and 240 minutes or less when the concentration of the metal salt in the reaction solution is 6 × 10⁻⁴ mol/L or more and 15 × 10⁻⁴ mol/L or less, and the equivalent concentration of the reducing agent is twice or more and less than four times the equivalent concentration of the metal salt. According to the fifth embodiment, the average particle diameter of metal colloidal particles can be 1.8 nm or smaller without precipitating the metal colloidal particles.

As a sixth embodiment thereof, the reaction time is 60 minutes or more and 120 minutes or less when the concentration of the metal salt in the reaction solution is 4 × 10⁻⁴ mol/L or more and less than 6 × 10⁻⁴ mol/L, and the equivalent concentration of the reducing agent is equal to one or more and less than twice the equivalent concentration of the metal salt. According to the sixth embodiment, the average particle diameter of metal colloidal particles can be 2.3 nm or smaller without precipitating the metal colloidal particles.

As a seventh embodiment thereof, the reaction time is 30 minutes or more and 120 minutes or less when the concentration of the metal salt in the reaction solution is 6 × 10⁻⁴ mol/L or more and 15 × 10⁻⁴ mol/L or less, and the equivalent concentration of the reducing agent is equal to one or more and less than twice the equivalent concentration of the metal salt. According to the seventh embodiment, the average particle diameter of metal colloidal particles can be 1.8 nm or smaller without precipitating the metal colloidal particles.

If the concentration of the metal salt is less than 1 × 10⁻⁴ mol/L, the reaction solution is unsuitable for industrial applications, because the reducing reaction of metal ions is difficult to occur, and a long time is required until the colloidal particles grow to a predetermined particle diameter. On the other hand, if the concentration of the metal salt exceeds 15 × 10⁻⁴ mol/L, colloidal particles are easily aggregated, and precipitation occurs in the early stage after the start of reaction. If the equivalent concentration of the reducing agent in the reaction solution is less than the equivalent concentration of the metal salt, some of the metal salt cannot be reduced, and the metal recovery rate lowers naturally. On the other hand, if the equivalent concentration of the reducing agent exceeds 20 times the equivalent concentration of the metal salt, since the reducing agent itself aggregates and precipitates, the metal salt is also entangled in the precipitation, and the metal recovery rate lowers.

The colloidal solution prepared under the conditions of the above embodiments can be applied to various substrates using means well known to the art, such as a dip method and a spray method. The kind of the substrate is not specifically limited as long as colloidal particles can be fixed. For example, carbons, inorganic ceramics or organic polymers can be used. Two or more of these substrates can also be used in combination. As carbons, activated charcoal, charcoal and carbon fibers can be exemplified. As inorganic ceramics, alumina, titania, magnesia, silica or zeolite can be exemplified. As organic polymers, polyethylene, polypropylene, polystyrene, polyimide, polysulfone, polysilicone, Nation or polycellulose can be exemplified. Among these, glass fibers and scale-shaped glass are suited. When chemical treatment is performed using an acid or alkali solution, the surfaces of glass fibers and scale-shaped glass become porous easily. Since the average diameter of pores in these porous bodies is normally in the order of 1 to 10 nm, the colloidal particles of a metal prepared under the above conditions of the embodiments can well enter in the pores of the porous body, and can be strongly fixed there. Therefore, since a carrier using porous glass fiber or scale-shaped glass as the substrate has a large specific surface area of the substrate, the carrier can exhibit highly efficient catalytic activity, and excels in durability. This carrier is processed into textiles, non-woven fabrics, and utilized, for example, as an exhaust-gas cleaning filter in an engine muffler.

### [Examples]

The invention of a method for preparing a colloidal solution, and a carrier having colloidal particles fixed on the surface thereof will be more specifically described below, using examples, a reference example and comparative examples.

### (Reference Example 1)

First, a colloidal solution was prepared according to the description of the above-described publication. Referring to the colloidal solution of Reference Example 1, examples, the reference example and comparative examples will be sequentially described.

A 1,500-ml flask, a 100-ml conical flask, a 200-ml conical flask, a reflux condenser and a stirrer were immersed in aqua regia for a day and night, and the apparatuses were well cleaned using pure water ion-exchanged and ultra-filtered. Into the 1,500-ml flask, 850 ml of pure water ion-exchanged and ultra-filtered and the stirrer are charged, the reflux condenser is installed on the flask, and the pure water was heated to a temperature of 100°C. In order to remove dissolved oxygen, the pure water was boiled as it was for one hour. On the other hand, 0.1328 g of tetrachloroplatinic acid, hexahydrate (50 mg as platinum) was weighed and charged into the 100-ml conical flask, and pure water ion-exchanged and ultra-filtered was added to make 50 ml. One gram of sodium citrate was weighed and charged in the 200-ml conical flask, and pure water ion-exchanged and ultra-filtered was added to make 100 ml. After removing dissolved oxygen of the pure water, the aqueous solution of tetrachloroplatinic acid was charged from the 100-ml conical flask to the 1,500-ml flask, and heated to 100°C again. Furthermore, in order to remove dissolved oxygen, boiling was performed for 30 minutes. Then, the aqueous solution of sodium citrate was slowly added from the 200-ml flask so that the boiling state could be maintained. In this reaction solution, the concentration of platinum is 50 mg/L = 2.6 × 10⁻⁴ mol/L = 1.0 × 10⁻³ N, and the ratio of the mol concentration of sodium citrate to the mol concentration of platinum is 13.2. Since sodium citrate function as monatomic donor, the equivalent concentration of sodium citrate to the equivalent concentration of platinum is 3.3.

After the aqueous solution of sodium citrate was completely added in the 1,500-ml flask, the reducing reaction was continued in the boiling state, and reaction was stopped 30 minutes, 60 minutes, 90 minutes, 120 minutes and 240 minutes after the start of reaction, and each reaction solution was rapidly cooled to room temperature. The cooled reaction solution was passed through a column packed with ion-exchange resin Amberlite MB-1 (manufactured by Organo Corporation), and metal ions and the reducing agent left in the reaction solution were removed to obtain a stable colloidal solution. The concentration of the colloidal particles in the colloidal solution was measured using plasma emission spectrometry, and an adequate amount of the colloidal particles were further sampled to determine the state of the catalytic activity thereof, that is, the particle diameter of the colloidal particles utilizing the hydrogen peroxide decomposing reaction. The results of these measurements are shown in Table 1 below together with the concentration of the reaction solution and the like. Also in order to confirm the accuracy of the measurement of the colloidal particles utilizing the hydrogen peroxide decomposing reaction, the average particle diameter of the colloidal particles of platinum in the reaction solution rapidly cooled to room temperature 120 minutes after the start of the reaction was measured using a transmission electron microscope. As a result, the average particle diameter of the colloidal particles was 3.5 nm, and it was confirmed to agree with the result of measurement utilizing the hydrogen peroxide decomposing reaction. The recovery rate of platinum can be obtained by dividing the platinum concentration in the product (colloidal particles) column in Table 1 by the platinum concentration and converting the quotient to percentage.

### (Example 1) to (Example 7) and (Comparative Example 1)

A colloidal solution of platinum was prepared in the same manner as in the above-described Reference Example 1 except that the added quantity of platinum and the added quantity of sodium citrate were changed to those shown in Table 1, and the properties thereof were studied. The results are summarized in Table 1 below. In Table 1, the Product (colloidal particles) columns where the values of platinum concentration or catalytic activity lower with the lapse of time show the occurrence of precipitation. When precipitation occurred, the platinum concentration and catalytic activity of the supernatant excluding precipitations were measured. Example 1 is the example corresponding to the first embodiment, that is, claim 1, and the Example 2 and the examples that follow are examples corresponding to the number of each claim.

### (Comparative Example 2)

A colloidal solution of platinum was prepared in the same manner as in Reference Example 1 except that the ratio of the equivalent concentration of sodium citrate to the equivalent concentration of platinum in the reaction solution is 33 times. As a result, the occurrence of precipitation started in the reaction solution before 60 elapsed after the start of the reaction.

**[Table 1]**

| | Reaction solution | | | | | Reaction time | Product (colloidal particles) | |
|---|---|---|---|---|---|---|---|---|
| | Platinum concentration | | | Sodium citrate (*1) | | | Platinum concentration | Catalytic activity |
| | (mg/L) | (mol/L) | (N) | (mol/ mol-Pt) | (N/N-Pt) | (min) | (mg/L) | (mol-O2/ mg-Pt/min) |
| Example ₁ | 50 | 0.00026 | 0.00103 | 26.4 | 6.6 | 30 | 14.94 | 0.00 |
| | | | | | | 60 | 44.23 | 0.41 |
| | | | | | | 90 | 42.28 | 0.98 |
| | | | | | | 120 | 40.00 | 1.44 |
| | | | | | | 240 | 52.82 | 2.04 |
| Example ₂ | 100 | 0.00051 | 0.00205 | 26.4 | 6.6 | 30 | 65.66 | 1.34 |
| | | | | | | 60 | 77.96 | 0.87 |
| | | | | | | 90 | 74.87 | 1.27 |
| | | | | | | 120 | 79.39 | 2.70 |
| | | | | | | 240 | 23.44 | 1.28 |
| Example ₃ | 150 | 0.00077 | 0.00308 | 26.4 | 6.6 | 30 | 90.47 | 1.00 |
| | | | | | | 60 | 84.21 | 0.89 |
| | | | | | | 90 | 88.10 | 0.93 |
| | | | | | | 120 | 36.90 | 0.43 |
| | | | | | | 240 | 1.24 | 0.00 |
| Example ₄ | 100 | 0.00051 | 0.00205 | 13.2 | 3.3 | 30 | 64.17 | 0.44 |
| | | | | | | 60 | 67.49 | 1.62 |
| | | | | | | 90 | 68.27 | 2.12 |
| | | | | | | 120 | 69.98 | 1.73 |
| | | | | | | 240 | 1.36 | 1.78 |
| Example | 150 | 0.00077 | 0.00308 | 13.2 | 3.3 | 30 | 108.09 | 1.19 |
| | | | | | | 60 | 115.29 | 1.10 |
| | | | | | | 90 | 109.24 | 0.49 |
| | | | | | | 120 | 120.82 | 2.58 |
| | | | | | | 240 | 109.96 | 3.84 |
| Reference Example 1 | 50 | 0.00026 | 0.00103 | 13.2 | 3.3 | 30 | 23.97 | 0.20 |
| | | | | | | 60 | 34.91 | 0.91 |
| | | | | | | 90 | 24.99 | 0.81 |
| | | | | | | 120 | 31.25 | 0.79 |
| | | | | | | 240 | 39.05 | 0.82 |
| Example ₆ | 100 | 0.00051 | 0.00205 | 4.4 | 1.1 | 30 | 69.86 | 0.59 |
| | | | | | | 60 | 73.32 | 1.96 |
| | | | | | | 90 | 70.08 | 1.86 |
| | | | | | | 120 | 76.32 | 1.51 |
| | | | | | | 240 | 78.08 | 0.73 |
| Example ₇ | 150 | 0.00077 | 0.00308 | 4.4 | 1.1 | 30 | 114.08 | 1.73 |
| | | | | | | 60 | 109.85 | 2.46 |
| | | | | | | 90 | 122.18 | 3.25 |
| | | | | | | 120 | 115.44 | 3.02 |
| | | | | | | 240 | 4.87 | 1.04 |
| Comparative Example 1 | 50 | 0.00026 | 0.00103 | 4.4 | 1.1 | 30 | 25.30 | 0.62 |
| | | | | | | 60 | 26.50 | 0.67 |
| | | | | | | 90 | 20.70 | 0.57 |
| | | | | | | 120 | 27.51 | 0.45 |
| | | | | | | 240 | 1.21 | 0.00 |

| | | | | | | | | |
|---|---|---|---|---|---|---|---|---|
| Note: * 1 In the reaction solution, sodium citrate functions as a mono-electron donor (reducing agent). | | | | | | | | |

By comparing the examples and the reference example in Table 1, the followings are known.

In the above Examples 1 to 7, if the reaction time is adequately adjusted, the metal recovery rate can be improved, or the catalytic activity can be elevated than the preparing method described in the above publications without causing the precipitation of colloidal particles.

The colloidal particles prepared using the above-described method have particle diameters in the order of 1 nm, have extremely high uniformity, requires no stabilizers even in a high-concentration state, and causes little aggregation. Therefore, by using means well known to the art, such as immersing the substrates in the colloidal solution, the colloidal particles can be easily and strongly fixed on the substrate. Also by using the colloidal solution, no heating or firing together with the substrate for forming colloidal particles is required, and not only the preparing process can be simplified, but also the formation of residues and impurities (byproducts) due to above-described formation can be avoided. As a result, according to the preparing method of the present invention, a fuel cell cathode, a fuel cell anode with extremely high catalytic activity and durability, and a low-temperature oxidation catalyst can be easily and conveniently obtained.

Means for applying the colloidal solution prepared to the substrate is not specifically limited, but means well known to the art, such as a dip method and a spray method, can be exemplified. The kind of the substrate is not specifically limited as long as colloidal particles can be fixed, and the substrate has required functions as a fuel cell cathode and a fuel cell anode, such as electric conductivity and heat resistance. For example, graphite or carbon black can be used. The form and shape of the substrate are also not specifically limited, but rod shape, fiber shape, plate shape, woven fabrics or bulk (aggregated body) can be exemplified.

The kind of the substrate for a low-temperature oxidation catalyst is not specifically limited as long as the substrate can fix colloidal particles, and has required functions as the carrier of the low-temperature oxidation catalyst, such as oxidation resistance and heat resistance. For example, carbons, inorganic ceramics or organic polymers can be used. Two or more kinds can also be used in combination. As carbons, activated charcoal, charcoal, carbon fibers and carbon black can be exemplified. As inorganic ceramics, alumina, titania, magnesia, silica or zeolite can be exemplified. As organic polymers, polyethylene, polypropylene, polystyrene, polyimide, polysulfone, polysilicone, Nation or polycellulose can be exemplified. The form and shape of the substrate are also not specifically limited, but fibers, woven fabrics, non-woven fabrics, films or powders can be exemplified. Among these, glass fibers and scale-shaped glass are suited. When chemical treatment is performed using an acid or alkali solution, the surfaces of glass fibers and scale-shaped glass become porous easily. Since the average diameter of pores in these porous bodies is normally in the order of 1 to 10 nm, the colloidal particles of a metal prepared under the above embodiments can well enter in the pores of the porous body, and can be strongly fixed there.

The reducing agent is not specifically limited as long as it dissolves in water, and alcohols, citric acids, carboxylic acids, ketones, ethers, aldehydes or esters can be exemplified. The combination of two or more of these can also be used. As alcohols, methanol, ethanol, 1-propanol, 2-propanol, ethylene glycol or glycerin can be exemplified. As citric acids, citric acid, and citrates, such as sodium citrate, potassium citrate and ammonium citrate can be exemplified. As carboxylic acids, formic acid, acetic acid, fumaric acid, malic acid, succinic acid, aspartic acid or carboxylates thereof can be exemplified. As ketones, acetone or methylethyl ketone can be can be exemplified. As ethers, diethyl ether can be exemplified. As aldehydes, formalin or acetaldehyde can be exemplified. As esters, methyl formate, methyl acetate or ethyl acetate can be exemplified. Among these, sodium citrate is particularly preferable because of its high reducibility and easy handing.

From the point of view of forming stable colloidal particles of a metal having a particle diameter of 1 to 20 nm, alcohols, citric acids or carboxylic acids are preferable as the reducing agent. In particular, citric acids are preferable for forming stable colloidal particles of a metal having a particle diameter of 1 to 5 nm. However, since the catalytic activity of colloidal particles at a low temperature (e.g., at 100°C or below) is sharply lowered if the particle diameter thereof is less than 1.6 nm, the particle diameter thereof is preferably 1.6 nm or more.

The solvent composing the reaction solution is not specifically limited as long as it can dissolve the reducing agent and the metal salt, and water, alcohols, ketones or ethers can be exemplified. The combination of two or more of these can also be used. As alcohols, methanol, ethanol, 1-propanol or 2-propanol can be exemplified. As ketones, methyl formate, methyl acetate or ethyl acetate can be exemplified. As ethers, methyl ethyl ether or diethyl ether can be exemplified. From point of view of completely dissolving the metal salts, the solvent is preferably water or alcohols.

The metal salt is not specifically limited as long as it is dissolved in the solvent, is reduced by a reducing agent, and can function as a catalyst when it becomes colloidal particles. For example, chlorides, nitrates, sulfates or metal complex compounds of platinum (Pt), ruthenium (Ru), gold (Au), lead (Pb), rhodium (Rh), iridium (Ir), cobalt (Co), iron (Fe), nickel (Ni), copper (Cu) or tin (Sn) can be listed. The combination of two or more of these can also be used. If the combination of two or more of metal salts is used, the colloidal particles of an alloy can be prepared. When a platinum salt is used as the metal salt, the particle diameter of colloidal particles becomes particularly small, and stable colloidal particles of 1 to 5 nm can be obtained. In particular, if chloroplatinic acid is used, the particle diameter of the colloidal particles becomes more uniformized.

If colloidal particles are fixed on a conductive substrate, a fuel cell cathode and a fuel cell anode can be obtained only by processing them using means well known to the art. Since colloidal particles are not coated with impurities or residues in the fuel cell cathode, the catalytic activity, that is, oxygen-reducing reactivity thereof is extremely high. Therefore, since the oxygen-reducing reaction occurs at high efficiency in the fuel cell using the cathode according to the present invention, the power-generation efficiency thereof is improved. Also since colloidal particles are not coated with impurities or residues in the fuel cell anode, the catalytic activity, that is, hydrogen-oxidizing reactivity thereof is extremely high. Therefore, since the hydrogen-oxidizing reaction occurs at high efficiency in the fuel cell using the anode according to the present invention, the power-generation efficiency thereof is improved. The method for manufacturing the fuel cell is not specifically limited, but means well known to the art can be used as it is.

Also if colloidal particles are fixed on a substrate, this can be utilized as a low-temperature oxidation catalyst. Here, a "low-temperature oxidation catalyst" means an oxidation catalyst that is used at 300°C or below, especially in the temperature region between 100 and 300°C. Since colloidal particles are not coated with impurities or residues in the low-temperature oxidation catalyst, the catalytic activity is extremely high. Especially in the low-temperature region between 150 and 200°C, the catalytic activity is two to three times the catalytic activity of the catalyst using colloidal particles prepared by existing methods, specifically by heating or firing on the surface of a carrier, such as zeolite. This aspect will be described later in examples.

Therefore, if the low-temperature oxidation catalyst is utilized in a fuel modifying device for a fuel cell, the CO-shifting reaction (CO + H₂O → CO₂ + H₂) can be efficiently caused at 300°C or below, especially in the low-temperature region between 150 and 200°C. Therefore, since conventional manufacturing methods and members can be used without modification in the fuel modifying device for a fuel cell according to the present invention, the power-generation efficiency of a fuel cell can be easily and conveniently improved at low costs. The method for manufacturing the fuel modifying device for a fuel cell is not specifically limited, but means well known to the art can be used as it is.

The invention of a fuel cell cathode, a fuel cell anode, a method for preparing the same, and a fuel cell will be specifically described below using examples and comparative examples.

### (Example 8)

A 1,500-ml flask, a 100-ml conical flask, a 200-ml conical flask, a reflux condenser and a stirrer were immersed in aqua regia for a day and night, and the apparatuses were well cleaned using pure water ion-exchanged and ultra-filtered. Into the 1,500-ml flask, 850 ml of pure water ion-exchanged and ultra-filtered and the stirrer are charged, the reflux condenser is installed on the flask, and the pure water was heated to a temperature of 100°C. In order to remove dissolved oxygen, the pure water was boiled as it was for one hour. On the other hand, 0.1328 g of tetrachloroplatinic acid, hexahydrate (50 mg as platinum) was weighed and charged into the 100-ml conical flask, and pure water ion-exchanged and ultra-filtered was added to make 50 ml. One gram of sodium citrate was weighed and charged in the 200-ml conical flask, and pure water ion-exchanged and ultra-filtered was added to make 100 ml. After removing dissolved oxygen of the pure water, the aqueous solution of tetrachloroplatinic acid was charged from the 100-ml conical flask to the 1,500-ml flask, and heated to 100°C again. Furthermore, in order to remove dissolved oxygen, boiling was performed for 30 minutes. Then, the aqueous solution of sodium citrate was slowly added from the 200-ml flask so that the boiling state could be maintained. In this reaction solution, the concentration of platinum is 50 mg/L = 2.6 × 10⁻⁴ mol/L = 1.0 × 10⁻³ N, and the ratio of the mol concentration of sodium citrate to the mol concentration of platinum is 13.2. Since sodium citrate function as monatomic donor, the equivalent concentration of sodium citrate to the equivalent concentration of platinum is 3.3.

After the aqueous solution of sodium citrate was completely added in the 1,500-ml flask, the reducing reaction was continued in the boiling state, and reaction was stopped 120 minutes after the start of reaction, and each reaction solution was rapidly cooled to room temperature. The cooled reaction solution was passed through a column packed with ion-exchange resin Amberlite MB-1 (manufactured by Organo Corporation), and metal ions and the reducing agent left in the reaction solution were removed to obtain a stable colloidal solution. The concentration of the colloidal particles in the colloidal solution was measured using plasma emission spectrometry, and an adequate amount of the colloidal particles were further sampled to determine the state of the catalytic activity thereof, that is, the particle diameter of the colloidal particles utilizing the hydrogen peroxide decomposing reaction. As a result, the concentration of the colloidal particles of platinum was 31.25 mg/L, and the catalytic activity was 0.79 mol-O₂/mg-Pt/min. Also in order to confirm the accuracy of the measurement of the colloidal particles utilizing the hydrogen peroxide decomposing reaction, the average particle diameter of the colloidal particles of platinum was measured using a transmission electron microscope. As a result, the average particle diameter of the colloidal particles was 3.5 nm, and it was confirmed to agree with the result of measurement utilizing the hydrogen peroxide decomposing reaction.

After immersing a commercially available graphite electrode (thin disc of an outer diameter of 3 mm) in a colloidal solution prepared using the above-described means for a predetermined time, it was pulled up and naturally dried. The quantity of the colloidal particles of platinum fixed on the surface of the graphite electrode was 10 µg-Pt/cm². The graphite electrode carrying the colloidal particles of platinum fixed thereon was closely adhered on the end face of a working electrode (rod-like graphite of an outer diameter of 6 mm), and immersed in an aqueous solution of sulfuric acid of a concentration of 0.5 M so that the colloidal particles of platinum penetrate. Then, oxygen gas was introduced into the aqueous solution of sulfuric acid, and bubbled for a while to saturate oxygen in the solution. While continuing bubbling, a reference electrode was connected to the working electrode, and the magnitude of the cathode current was measured. As a result, the cathode current value was i(O₂) = -2.31 A/g-Pt.

### (Example 9)

A colloidal solution and a fuel cell cathode were prepared in the same manner as in Example 8, except that the time from the start of the reaction to the stop of the reaction in the state wherein the aqueous solution of sodium citrate had been completely added in the 1,500 ml flask, and the reducing reaction was continued in the boiling state. The average particle diameter of the colloidal particles of platinum in the colloidal solution measured using a transmission electron microscope was known to be 1.1 nm. The quantity of the colloidal particles of platinum fixed on the surface of the graphite electrode was 10 µg-Pt/cm² same as in Example 8. The cathode current value measured under the same conditions as in Example 8 was i(O₂) = -2.35 A/g-Pt.

### (Comparative Example 3)

The means for fixing the colloidal particles of platinum on a graphite electrode in Example 8 was changed as follows: A graphite electrode was immersed in a solution containing bisacetyl acetonate platonic acid, pulled up after allowing to stand for a while, and heated and fired in the presence of hydrogen to form the colloidal particles of platinum on the graphite electrode. The quantity of the colloidal particles of platinum fixed on the surface of the graphite electrode was 10 µg-Pt/cm² same as in Example 8. A fuel cell cathode was fabricated in the same manner as in Example 8, and the cathode current value was measured. As a result, i(O₂) = -2.03 A/g-Pt.

### (Example 10)

A 1,500-ml flask, a 100-ml conical flask, a 200-ml conical flask, a reflux condenser and a stirrer were immersed in aqua regia for a day and night, and the apparatuses were well cleaned using pure water ion-exchanged and ultra-filtered. Into the 1,500-ml flask, 850 ml of pure water ion-exchanged and ultra-filtered and the stirrer are charged, the reflux condenser is installed on the flask, and the pure water was heated to a temperature of 100°C. In order to remove dissolved oxygen, the pure water was boiled as it was for one hour. On the other hand, 0.1328 g of tetrachloroplatinic acid, hexahydrate (50 mg as platinum) was weighed and charged into the 100-ml conical flask, and pure water ion-exchanged and ultra-filtered was added to make 50 ml. One gram of sodium citrate was weighed and charged in the 200-ml conical flask, and pure water ion-exchanged and ultra-filtered was added to make 100 ml. After removing dissolved oxygen of the pure water, the aqueous solution of tetrachloroplatinic acid was charged from the 100-ml conical flask to the 1,500-ml flask, and heated to 100°C again. Furthermore, in order to remove dissolved oxygen, boiling was performed for 30 minutes. Then, the aqueous solution of sodium citrate was slowly added from the 200-ml flask so that the boiling state could be maintained. In this reaction solution, the concentration of platinum is 50 mg/L = 2.6 × 10⁻⁴ mol/L = 1.0 × 10⁻³ N, and the ratio of the mol concentration of sodium citrate to the mol concentration of platinum is 13.2. Since sodium citrate function as monatomic donor, the equivalent concentration of sodium citrate to the equivalent concentration of platinum is 3.3.

After the aqueous solution of sodium citrate was completely added in the 1,500-ml flask, the reducing reaction was continued in the boiling state, and reaction was stopped 120 minutes after the start of reaction, and each reaction solution was rapidly cooled to room temperature. The cooled reaction solution was passed through a column packed with ion-exchange resin Amberlite MB-1 (manufactured by Organo Corporation), and metal ions and the reducing agent left in the reaction solution were removed to obtain a stable colloidal solution. The concentration of the colloidal particles in the colloidal solution was measured using plasma emission spectrometry, and an adequate amount of the colloidal particles were further sampled to determine the state of the catalytic activity thereof, that is, the particle diameter of the colloidal particles utilizing the hydrogen peroxide decomposing reaction. As a result, the concentration of the colloidal particles of platinum was 31.25 mg/L, and the catalytic activity was 0.79 mol-O₂/mg-Pt/min. Also in order to confirm the accuracy of the measurement of the colloidal particles utilizing the hydrogen peroxide decomposing reaction, the average particle diameter of the colloidal particles of platinum was measured using a transmission electron microscope. As a result, the average particle diameter of the colloidal particles was 3.5 nm, and it was confirmed to agree with the result of measurement utilizing the hydrogen peroxide decomposing reaction.

After immersing a commercially available graphite electrode (thin disc of an outer diameter of 3 mm) in a colloidal solution prepared using the above-described means for a predetermined time, it was pulled up and naturally dried. The quantity of the colloidal particles of platinum fixed on the surface of the graphite electrode was 10 µg-Pt/cm². The graphite electrode carrying the colloidal particles of platinum fixed thereon was closely adhered on the end face of a working electrode (rod-like graphite of an outer diameter of 6 mm), and immersed in an aqueous solution of sulfuric acid of a concentration of 0.5 M so that the colloidal particles of platinum penetrate. Then, hydrogen gas was introduced into the aqueous solution of sulfuric acid, and bubbled for a while to saturate hydrogen in the solution.
While continuing bubbling, a reference electrode was connected to the working electrode, and the magnitude of the anode current was measured. As a result, the anode current value was i(H₂) = 1.28 A/g-Pt.

### (Comparative Example 4)

The means for fixing the colloidal particles of platinum on a graphite electrode in Example 10 was changed as follows: A graphite electrode was immersed in a solution containing bisacetyl acetonate platonic acid, pulled up after allowing to stand for a while, and heated and fired in the presence of hydrogen to form the colloidal particles of platinum on the graphite electrode. The quantity of the colloidal particles of platinum fixed on the surface of the graphite electrode was 10 µg-Pt/cm² same as in Example 10. A fuel cell cathode was fabricated in the same manner as in Example 10, and the anode current value was measured. As a result, i(H₂) = 1.08 A/g-Pt.

### (Example 11)

A 1,500-ml flask, a 100-ml conical flask, a 200-ml conical flask, a reflux condenser and a stirrer were immersed in aqua regia for a day and night, and the apparatuses were well cleaned using pure water ion-exchanged and ultra-filtered. Into the 1,500-ml flask, 850 ml of pure water ion-exchanged and ultra-filtered and the stirrer are charged, the reflux condenser is installed on the flask, and the pure water was heated to a temperature of 100°C. In order to remove dissolved oxygen, the pure water was boiled as it was for one hour. On the other hand, 0.1328 g of tetrachloroplatinic acid, hexahydrate (50 mg as platinum) was weighed and charged into the 100-ml conical flask, and pure water ion-exchanged and ultra-filtered was added to make 50 ml. One gram of sodium citrate was weighed and charged in the 200-ml conical flask, and pure water ion-exchanged and ultra-filtered was added to make 100 ml. After removing dissolved oxygen of the pure water, the aqueous solution of tetrachloroplatinic acid was charged from the 100-ml conical flask to the 1,500-ml flask, and heated to 100°C again. Furthermore, in order to remove dissolved oxygen, boiling was performed for 30 minutes. Then, the aqueous solution of sodium citrate was slowly added from the 200-ml flask so that the boiling state could be maintained. In this reaction solution, the concentration of platinum is 50 mg/L = 2.6 × 10⁻⁴ mol/L = 1.0 × 10⁻³ N, and the ratio of the mol concentration of sodium citrate to the mol concentration of platinum is 13.2. Since sodium citrate function as monatomic donor, the equivalent concentration of sodium citrate to the equivalent concentration of platinum is 3.3.

After the aqueous solution of sodium citrate was completely added in the 1,500-ml flask, the reducing reaction was continued in the boiling state, and reaction was stopped 120 minutes after the start of reaction, and each reaction solution was rapidly cooled to room temperature. The cooled reaction solution was passed through a column packed with ion-exchange resin Amberlite MB-1 (manufactured by Organo Corporation), and metal ions and the reducing agent left in the reaction solution were removed to obtain a stable colloidal solution. The concentration of the colloidal particles in the colloidal solution was measured using plasma emission spectrometry, and an adequate amount of the colloidal particles were further sampled to determine the state of the catalytic activity thereof, that is, the particle diameter of the colloidal particles utilizing the hydrogen peroxide decomposing reaction. As a result, the concentration of the colloidal particles of platinum was 31.25 mg/L, and the catalytic activity was 0.79 mol-O₂/mg-Pt/min. Also in order to confirm the accuracy of the measurement of the colloidal particles utilizing the hydrogen peroxide decomposing reaction, the average particle diameter of the colloidal particles of platinum was measured using a transmission electron microscope. As a result, the average particle diameter of the colloidal particles was 3.5 nm, and it was confirmed to agree with the result of measurement utilizing the hydrogen peroxide decomposing reaction.

After adding the fine alumina particles in the colloidal solution prepared using the above-described means and immersing for a predetermined time, the fine particles were pulled up and naturally died. Thereafter, the fine alumina particles were stored in a desiccator for several days to completely remove the solvent of the colloidal solution. Thereafter, the fixation rate of the colloidal particles of platinum in the fine alumina particles was measured (calculated from the mass difference between before and after the fixation of the colloidal particles of platinum). The fixation rate of the colloidal particles of platinum was 0.27% by mass.

In order to measure the catalytic activity of the fine alumina particle to which the colloidal particles have adhered, that is, a low-temperature oxidation catalyst, the CO conversion rate was measured using the following means: As the measuring conditions, a mixed gas consisting of the gas composition (ratio by volume) of CO = 0.8%, CO₂ = 20.2%, H₂ = 38.5%, O₂ = 0.8%, and He = 39.7% was used; and each CO conversion rate was measured when the spatial velocity (SV) was 11,000 h⁻¹ (catalyst 2 ml/gas flow rate 22 L/H); and the temperature of the low-temperature oxidation catalyst and the mixed gas was 50, 100, 150, 200,250 or 300°C. The results are shown in Figure 1.

### (Example 12)

A colloidal solution and a low temperature oxidation catalyst were prepared in the same manner as in Example 11, except that the time from the start of the reaction to the stop of the reaction was shorten in the state wherein the aqueous solution of sodium citrate had been completely added in the 1,500 ml flask, and the reducing reaction was continued in the boiling state. The average particle diameter of the colloidal particles of platinum in the colloidal solution measured using a transmission electron microscope was known to be 1.1 nm. The fixing rate of the colloidal particles of platinum in the low-temperature oxidation catalyst (fine alumina particles having the colloidal particles of platinum fixed thereon) was 0.20% by mass.

Furthermore, the CO conversion rate of the low-temperature oxidation catalyst was measured under the same conditions as in Example 11. The results are shown in Figure 1.

### (Comparative Example 5)

In Example 11, the low-temperature oxidation catalyst was not prepared, but commercially available fine alumina particles having the colloidal particles of platinum fixed thereon (N-220, manufactured by Sud-Chemie Catalysts Japan, Inc.) were used. The fixing rate of the colloidal particles of platinum in the fine alumina particles was 0.20% by mass, and since the measured specific surface area of the colloidal particles of platinum was about 160 m²/g, the average particle diameter thereof is considered to be about 1 nm, substantially equal to the colloidal particles of platinum prepared in Example 12. Further, the CO conversion rate was measured under the same conditions as in Example 11. The results are shown in Figure 1.

By comparing these Examples 11, 12 and Comparative Example 5, the low-temperature oxidation catalyst according to the present invention has higher catalytic activity than the catalyst prepared by existing methods. In particular, within the range between 150 and 200°C, the catalytic activity is as high as two to three times the catalyst prepared by existing methods.

By comparing Example 11 and Example 12, it is known that the larger the average particle diameter of the colloidal particles of platinum, the lower temperature region the catalytic activity starts elevating. However, since the larger the average particle diameter, the easier the colloidal particles of platinum precipitate, it is preferable that the average particle diameter is 5 nm or less. Specifically, the preferable average particle diameter of the colloidal particles of platinum is 3.5 to 5 nm.

### Industrial Applicability

Since the present invention is constituted as described above, it exerts the following effects. In a method for forming the colloidal particles of a metal by boiling a solution containing a metal salt and a reducing agent, the average particle diameter of the colloidal particles can be further reduced and uniformized, and various properties thereof, such as catalytic activity, can be improved by combining and adjusting three preparing conditions (parameters) directly affecting the formation, association and aggregation of the colloidal particles. The metal recovery rate of the metal salt can also be improved. Furthermore, by fixing the colloidal particles on a porous substrate or the like, a carrier having a high catalytic activity, as well as durability, can be obtained.

In addition, since the present invention is constituted as described above, it exerts the following effects. According to the methods for preparing a cathode, a fuel cell anode, and a low-temperature oxidation catalyst of the present invention, since an extremely stable colloidal solution containing no impurities, such as a stabilizer, is applied onto the substrate, no heating or firing of the substrate for forming the colloidal particles becomes required, and concurrently, the lowering of the catalytic activity due to the occurrence of residues or the like can be avoided. Also since the colloidal solution can be prepared in a simple process using an inexpensive metal salt as the starting material, the preparation costs can be suppressed. Also since the colloidal solution has a uniform particle diameter, and hardly aggregates even in a high concentration, no stabilizers for preventing precipitation are required.

In addition, according to a fuel cell cathode of the present invention, water can be efficiently formed from hydrogen ions and oxygen. Furthermore, according to a fuel cell of the present invention, power-generating efficiency can be improved.

In addition, according to a fuel cell anode of the present invention, hydrogen ions can be efficiently formed. Furthermore, according to a fuel cell of the present invention, power-generating efficiency can be improved.

Moreover, according to a low-temperature oxidation catalyst of the present invention, catalytic functions can be exerted at a high efficiency in an environment of 300°C or below, particularly 150 to 200°C. Furthermore, according to fuel modifying device for a fuel cell of the present invention, the CO shifting reaction can be efficiently caused even at low temperatures. Therefore, the device can contribute to the improvement of the power-generating efficiency of the fuel cell, and by utilizing members having not so high heat resistance, the manufacturing costs can be reduced.

## Claims

1. A colloidal solution preparing method for forming colloidal particles by boiling a solution containing a metal salt and a reducing agent,
wherein the concentration of the metal salt in said solution is 1 × 10⁻⁴ mol/L or more and less than 4 × 10⁻⁴ mol/L; the equivalent concentration of the reducing agent is four times or more and 20 times or less the equivalent concentration of the metal salt; and the reaction time is 60 minutes or more and 300 minutes or less.

2. A colloidal solution preparing method for forming colloidal particles by boiling a solution containing a metal salt and a reducing agent,
wherein the concentration of the metal salt in said solution is 4 × 10⁻⁴ mol/L or more and less than 6 × 10⁻⁴ mol/L; the equivalent concentration of the reducing agent in four times or more and 20 times or less the equivalent concentration of the metal salt; and the reaction time is 30 minutes or more and 150 minutes or less.

3. A colloidal solution preparing method for forming colloidal particles by boiling a solution containing a metal salt and a reducing agent,
wherein the concentration of the metal salt in said solution is 6 × 10⁻⁴ mol/L or more and 15 × 10⁻⁴ mol/L or less; the equivalent concentration of the reducing agent in four times or more and 20 times or less the equivalent concentration of the metal salt; and the reaction time is 30 minutes or more and 90 minutes or less.

4. A colloidal solution preparing method for forming colloidal particles by boiling a solution containing a metal salt and a reducing agent,
wherein the concentration of the metal salt in said solution is 4 × 10⁻⁴ mol/L or more and less than 6 × 10⁻⁴ mol/L; the equivalent concentration of the reducing agent in twice or more and less than four times the equivalent concentration of the metal salt; and the reaction time is 60 minutes or more and 120 minutes or less.

5. A colloidal solution preparing method for forming colloidal particles by boiling a solution containing a metal salt and a reducing agent,
wherein the concentration of the metal salt in said solution is 6 × 10⁻⁴ mol/L or more and 15 × 10⁴ mol/L or less; the equivalent concentration of the reducing agent in twice or more and less than four times the equivalent concentration of the metal salt; and the reaction time is 30 minutes or more and 240 minutes or less.

6. A colloidal solution preparing method for forming colloidal particles by boiling a solution containing a metal salt and a reducing agent,
wherein the concentration of the metal salt in said solution is 4 × 10⁻⁴ mol/L or more and less than 6 × 10⁻⁴ mol/L; the equivalent concentration of the reducing agent is once or more and less than twice the equivalent concentration of the metal salt; and the reaction time is 60 minutes or more and 120 minutes or less.

7. A colloidal solution preparing method for forming colloidal particles by boiling a solution containing a metal salt and a reducing agent,
wherein the concentration of the metal salt in said solution is 6 × 10⁻⁴ mol/L or more and 15 × 10⁻⁴ mol/L or less; the equivalent concentration of the reducing agent in once or more and less than twice the equivalent concentration of the metal salt; and the reaction time is 30 minutes or more and 120 minutes or less.

8. The colloidal solution preparing method according to any one of claims 1 to 7 wherein said reducing agent is a citrate.

9. The colloidal solution preparing method according to any one of claims 1 to 8 wherein the average particle diameter of said colloidal particles is 1.6 to 5 nm.

10. A carrier wherein colloidal particles are fixed on the surface of a substrate by applying the colloidal solution prepared by the method according to any one of claims 1 to 9.

11. The carrier according to claim 10 wherein said substrate is glass fiber or scale-like glass.

12. The carrier according to claim 10 or 11 wherein said substrate is porous.

13. A method for manufacturing a fuel cell cathode wherein a colloidal solution prepared in the state wherein a solution containing a metal salt and a reducing agent is boiled to remove dissolved oxygen is applied to a substrate, and colloidal particles are fixed on said substrate.

14. The method for manufacturing a fuel cell cathode according to claim 13, wherein said metal salt is chloroplatinic acid.

15. The method for manufacturing a fuel cell cathode according to claim 13 or 14, wherein said reducing agent is sodium citrate.

16. The method for manufacturing a fuel cell cathode according to any one of claims 13 to 15, wherein the average particle diameter of said colloidal particles is 1.6 to 5 nm.

17. A fuel cell cathode manufactured using the method according to any one of claims 13 to 16.

18. A fuel cell using the cathode according to claim 17.

19. A method for manufacturing a fuel cell anode wherein a colloidal solution prepared in the state wherein a solution containing a metal salt and a reducing agent is boiled to remove dissolved oxygen is applied to a substrate, and colloidal particles are fixed on said substrate.

20. The method for manufacturing a fuel cell anode according to claim 19, wherein said metal salt is chloroplatinic acid.

21. The method for manufacturing a fuel cell anode according to claim 19 or 20, wherein said reducing agent is sodium citrate.

22. The method for manufacturing a fuel cell anode according to any one of claims 19 to 21, wherein the average particle diameter of said colloidal particles is 1.6 to 5 nm.

23. A fuel cell anode manufactured using the method according to any one of claims 19 to 22.

24. A fuel cell using the anode according to claim 23.

25. A method for preparing a low-temperature oxidation catalyst wherein a colloidal solution prepared in the state wherein a solution containing a metal salt and a reducing agent is boiled to remove dissolved oxygen is applied to a substrate, and colloidal particles are fixed on said substrate.

26. The method for preparing a low-temperature oxidation catalyst according to claim 25 wherein said metal salt is chloroplatinic acid.

27. The method for preparing a low-temperature oxidation catalyst according to claim 25 or 26 wherein said reducing agent is sodium citrate.

28. The method for preparing a low-temperature oxidation catalyst according to any one of claims 25 to 27, wherein the average particle diameter of said colloidal particles is 1.6 to 5 nm.

29. A low-temperature oxidation catalyst prepared using the method according to any one of claims 25 to 28.

30. A fuel modifying device for a fuel cell using the low-temperature oxidation catalyst according to claim 29.
